# EUROPÄISCHE PATENTANMELDUNG

(11) **EP 0 981 943 A1**
(43) Veröffentlichungstag der Anmeldung: **01.03.2000**
(21) Anmeldenummer: 99116934.3
(22) Anmeldetag: 27.08.1999
(51) Int. Cl.: A01D 34/00

(54) **Konvertierbarer Mäher**

(30) Priorität: 28.08.1998 DE 29815414 U
(71) Anmelder: Erhardt, Willi, 96317 Kronach (DE); Erhardt, Luise, 96317 Kronach (DE)
(72) Erfinder: Erhardt, Willi, 96317 Kronach (DE); Erhardt, Luise, 96317 Kronach (DE)
(74) Vertreter: Eichstädt, Alfred, Dipl.-Ing.

(57) **Zusammenfassung**

Die Erfindung betrifft ein Mähgerät mit mindestens einem rotierenden Messer und einer Auswurföffnung für das abgemähte Schnittgut. Weiterhin weist das Mähgerät einen die Auswurföffnung verschließenden Einschubkeil auf. Durch das Verschließen der Auswurföffnung mittels des Einschubkeiles wird erreicht, daß das abgemähte Schnittgut so lange weiterzerkleinert wird, bis es in Form von Feinstpartikeln nach unten aus dem Mähgerät fällt.

## Beschreibung

Die Erfindung betrifft ein Mähgerät mit mindestens einem rotierenden Messer und mit einer Auswurföffnung für das abgemähte Schnittgut.

Es sind bereits Mähgeräte in Form von Handrasenmähern bekannt, die entweder als Benzin- oder als Elektrorasenmäher realisiert sind.

Weiterhin sind bereits Mähgeräte in Form von Rasentraktoren bekannt, die als Heckfangtraktoren mit einem an ihrer Heckseite befestigten Grasfangbehälter versehen sind. Bei derartigen Heckfangtraktoren sind zum Abschneiden des Grases zwei gegenläufig rotierende Messer vorgesehen. Das abgemähte Schnittgut wird durch eine an der Heckseite des Traktors vorgesehene und dort mittig angeordnete Auswurföffnung in den Grasfangbehälter ausgeworfen.

Weiterhin sind bereits sogenannte Ridermäher bekannt, welche nur ein rotierendes Messer aufweisen und welche mit einer an der Heckseite seitlich angeordneten Auswurföffnung für das abgemähte Schnittgut versehen sind.

Ein Problem bekannter Mähgeräte besteht darin, daß das abgemähte Schnittgut, welches im Grasfangbehälter gesammelt wird, in geeigneter Weise abtransportiert bzw. entsorgt werden muß. Dies ist insbesondere dann, wenn große Mengen Schnittgut anfallen, aufwendig.

Ausgehend von diesem Stand der Technik liegt der Erfindung die Aufgabe zugrunde, einen Weg aufzuzeigen, wie das Erfordernis eines Abtransports des abgemähten Schnittgutes vermieden werden kann.

Diese Aufgabe wird durch ein Mähgerät mit den im Anspruch 1 angegebenen Merkmalen gelöst. Vorteilhafte Weiterbildungen der Erfindung ergeben sich aus den abhängigen Ansprüchen 2 bis 11. Die Ansprüche 12 bis 20 betreffen einen Einschubkeil zum Verschließen der Auswurföffnung eines Mähgerätes.

Die Vorteile der Erfindung bestehen insbesondere darin, daß bereits auf dem Markt befindliche Mähgeräte mit dem Einschubkeil gemäß der Erfindung nachgerüstet werden können. Durch das Verschließen der Auswurföffnung mittels des Einschubkeiles wird erreicht, daß das abgemähte Schnittgut nicht unmittelbar nach dem Abschneiden in einen Grasfangbehälter weitertransportiert wird, sondern von dem bzw. den rotierenden Messern des Mähgerätes so lange weiterzerkleinert wird, bis letztendlich das abgemähte Schnittgut in Form von Feinstpartikeln nach unten aus dem Bereich des rotierenden Messers aus dem Mähgerät fällt und als "Dünger" auf der abgemähten Fläche verbleibt.

Weitere vorteilhafte Eigenschaften der Erfindung ergeben sich aus der Erläuterung eines Ausführungsbeispiels anhand der Figuren.

Es zeigt:
- FIG 1: eine Seitenansicht eines Einschubkeiles mit daran befestigter Einschubstange und
- FIG 2: eine Ansicht des in Figur 1 gezeigten Einschubkeiles von seiner Unterseite, wobei in dieser Darstellung die Einschubstange nicht gezeigt ist.

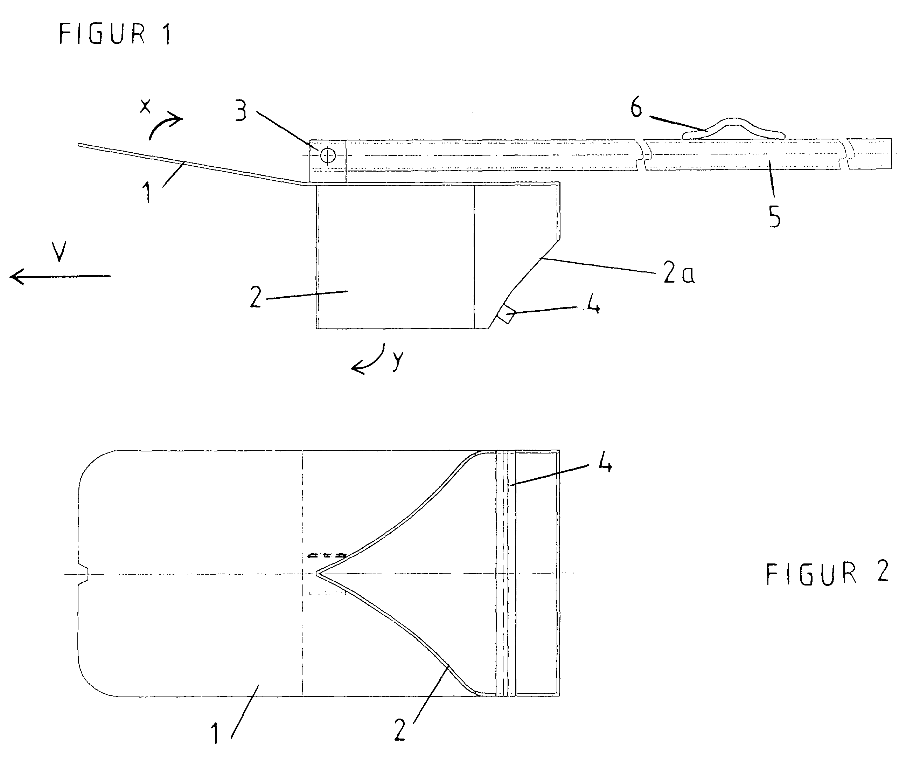

Die Figur 1 zeigt eine Seitenansicht eines Einschubkeiles mit daran befestigter Einschubstange. Der gezeigte Einschubkeil wird in der gezeigten Stellung in Richtung des Pfeiles V von der Rückseite des Mähgerätes zum Verschließen der Auswurföffnung in dieses eingeführt und mit dieser Rückseite verklemmt.

Bei dem Mähgerät handelt es sich vorzugsweise um einen Rasentraktor, welcher zwei gegenläufig rotierende Messer aufweist und welcher an seiner Heckseite mit einer Auswurföffnung versehen ist, die dort mittig angeordnet ist. Weiterhin kann es sich bei dem Mähgerät auch um einen Ridermäher handeln, welcher nur ein rotierendes Messer aufweist und welcher weiterhin eine an seiner Heckseite vorgesehene und dort seitlich angeordnete Auswurföffnung aufweist.

Die Einschubstange 5 ist insbesondere deshalb vorgesehen, um ein Einschieben des Einschubkeiles in das Mähgerät zu erleichtern. An der Einschubstange 5 ist eine Halterung 6 vorgesehen, die zu einer geeigneten Justierung des Einschubkeiles im Mähgerät beiträgt.

Die Einschubstange 5 ist am Einschubkeil mittels einer Halterung 3 befestigt, die am Einschubkeil vorgesehen ist. Diese Befestigung erfolgt vorzugsweise mittels einer Schraubenverbindung. Um das Einschieben des Einschubkeiles in das Mähgerät und eine geeignete Justierung des Einschubkeiles im Mähgerät zu vereinfachen, ist die Halterung 3 vorzugsweise derart ausgestaltet, daß der Einschubkeil an der Einschubstange 5 kippbar befestigt ist, wie es durch die Pfeile x und y in der Figur 1 angedeutet ist.

Der Einschubkeil gemäß der Erfindung weist einen oberen Abschlußdeckel 1 auf, an welchen ein Verschlußkammerrahmen 2 mittels einer Schweißverbindung befestigt ist. Der obere Abschlußdeckel 1 ist flach ausgebildet und verläuft in Richtung der Vorderseite des Mähgerätes nach oben abgewinkelt. Der Verschlußkammerrahmen weist an seiner Rückseite eine Abschrägung 2a auf, in deren Bereich eine querverlaufende, d. h. senkrecht zur Zeichenebene angeordnete, Anschlagleiste 4 vorgesehen ist. Die Abschrägung 2a und die Anschlagleiste 4 tragen zur sicheren Halterung des Einschubkeiles im Mähgerät bei.

In der Figur 2 ist der Einschubkeil von seiner Unterseite her gezeigt, wobei in dieser Figur die Einschubstange 5 nicht dargestellt ist. Es ist ersichtlich, daß der Verschlußkammerrahmen 2 nach vorne zu spitz verläuft und gebogene Seitenwände aufweist. Die Seitenwände des Verschlußkammerrahmens sind deshalb gebogen ausgebildet, um die Form des Verschlußkammerrahmens an den Weg der beiden kreisförmig rotierenden Messer des Mähgerätes anzupassen, bei welchem es sich im gezeigten Ausführungsbeispiel um einen Rasentraktor mit zwei gegenläufig rotierenden Messern handelt.

Ist der in den Figuren dargestellte Einschubkeil von hinten her in das Mähgerät eingesetzt und dadurch die Auswurföffnung des Mähgerätes verschlossen, dann kann während des Betriebes das abgemähte Schnittgut nicht durch die Auswurföffnung in einen Grasfangbehälter austreten, sondern verbleibt im Bereich der rotierenden Messer und wird von diesen solange zerkleinert, bis feinste Graspartikel vorliegen. Diese fallen dann nach unten aus dem Bereich der rotierenden Messer und auch aus dem Bereich des Mähgerätes auf die abgemähte Fläche hinab und bleiben dort als Dünger liegen. Ein Abtransport des abgemähten Schnittgutes ist folglich nicht mehr notwendig.

Ein wesentlicher Vorteil eines Mähgerätes gemäß der Erfindung besteht darin, daß der beschriebene Einschubkeil im Sinne eines Zusatzbauteiles erworben werden kann, so daß der Benutzer sich frei entscheiden kann, ob er in herkömmlicher Weise das Mähgerät mit einem daran befestigten Grasfangbehälter betreiben möchte, wobei das abgemähte Schnittgut in den Grasfangbehälter geworfen wird und abtransportiert werden muß, oder ob er den Einschubkeil zum Verschließen der Auswurföffnung in das Mähgerät einführt und dadurch erreicht, daß das abgemähte Schnittgut in feinste Partikel zerkleinert wird, welche auf der abgemähten Grasfläche verbleiben können.

Ein Einschubkeil gemäß der Erfindung ist vorzugsweise aus Metall, insbesondere Stahl, hergestellt, um den während des Betriebes auftretenden hohen mechanischen Belastungen gerecht zu werden.

Es ist aber auch möglich, den Einschubkeil aus Kunststoff herzustellen, wodurch insbesondere das Gewicht des Einschubkeiles niedrig bleibt, was die Handhabbarkeit und einen Transport des Einschubkeiles erleichtert.

## Patentansprüche

1. Mähgerät mit mindestens einem rotierenden Messer und mit einer Auswurföffnung für das abgemähte Schnittgut, **dadurch gekennzeichnet,** daß es weiterhin einen die Auswurföffnung verschließenden Einschubkeil (1, 2, 2a, 3, 4) aufweist.

2. Mähgerät nach Anspruch 1, **dadurch gekennzeichnet,** daß es ein Rasentraktor ist, welcher zwei gegenläufig rotierende Messer und eine an seiner Heckseite vorgesehene und dort mittig angeordnete Auswurföffnung aufweist, oder daß es ein Ridermäher ist, welcher ein rotierendes Messer und eine an seiner Heckseite vorgesehene und dort seitlich angeordnete Auswurföffnung aufweist.

3. Mähgerät nach einem der vorhergehenden Ansprüche, **dadurch gekennzeichnet,** daß der Einschubkeil eine Halterung (3) aufweist, über welche er an einer Einschubstange (5) befestigt ist.

4. Mähgerät nach Anspruch 3, **dadurch gekennzeichnet,** daß der Einschubkeil an der Einschubstange (5) kippbar befestigt ist.

5. Mähgerät nach Anspruch 4, **dadurch gekennzeichnet,** daß die Einschubstange (5) mit einer Halterung (6) versehen ist.

6. Mähgerät nach einem der vorhergehenden Ansprüche, **dadurch gekennzeichnet,** daß der Einschubkeil einen oberen Abschlußdeckel (1) und einen an diesem befestigten Verschlußkammerrahmen (2) aufweist.

7. Mähgerät nach Anspruch 6, **dadurch gekennzeichnet,** daß der Verschlußkammerrahmen (2) nach vorne spitz oder abgerundet verläuft sowie mindestens eine gebogene Seitenwand aufweist.

8. Mähgerät nach Anspruch 6 oder 7, **dadurch gekennzeichnet,** daß der Verschlußkammerrahmen (2) an seiner Rückseite mit einer Abschrägung (2a) versehen ist.

9. Mähgerät nach Anspruch 8, **dadurch gekennzeichnet,** daß der Verschlußkammerrahmen (2) im Bereich seiner Abschrägung (2a) mit einer querverlaufenden Anschlagleiste (4) versehen ist.

10. Mähgerät nach einem der Ansprüche 6 bis 9, **dadurch gekennzeichnet,** daß der obere Abschlußdeckel (1) flach ausgebildet und in Richtung der Vorderseite des Mähgerätes nach oben abgewinkelt ist.

11. Mähgerät nach einem der vorhergehenden Ansprüche, **dadurch gekennzeichnet,** daß der Einschubkeil aus Metall oder aus Kunststoff besteht.

12. Einschubkeil zum Verschließen der Auswurföffnung eines Mähgerätes, welcher Einschubkeil (1, 2, 2a, 3, 4) einen oberen Abschlußdeckel (1) und einen an diesem befestigten Verschlußkammerrahmen (2) aufweist.

13. Einschubkeil nach Anspruch 12, **dadurch gekennzeichnet,** daß er eine Halterung (3) aufweist, über welche er an einer Einschubstange (5) befestigt ist.

14. Einschubkeil nach Anspruch 13, **dadurch gekennzeichnet,** daß er an der Einschubstange (5) kippbar befestigt ist.

15. Einschubkeil nach Anspruch 13 oder 14, **dadurch gekennzeichnet,** daß die Einschubstange (5) mit einer Halterung (6) versehen ist.

16. Einschubkeil nach einem der Ansprüche 12 bis 15, **dadurch gekennzeichnet,** daß der Verschlußkammerrahmen (2) nach vorne spitz oder abgerundet verläuft sowie mindestens eine gebogene Seitenwand aufweist.

17. Einschubkeil nach einem der Ansprüche 12 bis 16, **dadurch gekennzeichnet,** daß der Verschlußkammerrahmen (2) an seiner Rückseite mit einer Abschrägung (2a) versehen ist.

18. Einschubkeil nach Anspruch 17, **dadurch gekennzeichnet,** daß der Verschlußkammerrahmen (2) im Bereich seiner Abschrägung (2a) mit einer querverlaufenden Anschlagleiste (4) versehen ist.

19. Einschubkeil nach einem der vorhergehenden Ansprüche 12 bis 18, **dadurch gekennzeichnet,** daß der obere Abschlußdeckel (1) flach ausgebildet und in Richtung der Vorderseite des Mähgerätes nach oben abgewinkelt ist.

20. Einschubkeil nach einem der Ansprüche 12 bis 19, **dadurch gekennzeichnet,** daß er aus Metall oder aus Kunststoff besteht.
